# EUROPÄISCHE PATENTSCHRIFT

(11) **EP 2 089 690 B1**
(45) Veröffentlichungstag und Bekanntmachung des Hinweises auf die Patenterteilung: **07.12.2016**
(21) Anmeldenummer: 07817628.6
(22) Anmeldetag: 08.10.2007
(51) Int. Cl.: G01N 21/359, G01N 21/84

(54) **VERFAHREN UND VORRICHTUNG ZUR REKALIBRIERUNG VON HERSTELLUNGSPROZESSEN**
METHOD AND DEVICE FOR RECALIBRATING PRODUCTION PROCESSES
PROCÉDÉ ET DISPOSITIF DE RECALIBRAGE DE PROCÉDÉS DE PRODUCTION

(30) Priorität: 07.11.2006 DE 102006052673
(43) Veröffentlichungstag der Anmeldung: 19.08.2009
(73) Patentinhaber: Büchi Labortechnik AG, 9230 Flawil 1 (CH)
(72) Erfinder: Schneider, Thomas, 69207 Sandhausen (DE); Qvarfort, Tomas, 69168 Wiesloch (DE)
(74) Vertreter: Geitz Truckenmüller Lucht
(86) Internationale Anmeldenummer: PCT/DE2007/001786
(87) Internationale Veröffentlichungsnummer: WO 2008/055455

(56) Entgegenhaltungen:
- EP-A- 1 480 033
- US-A- 6 072 576

## Beschreibung

Die Erfindung betrifft ein Verfahren und eine Vorrichtung zur automatisierten Rekalibrierung im Rahmen der Bestimmung der Inhaltsstoffe einer Substanz.

Hierzu sind vorbekannte verfahren der EP 1 480 033 A1 sowie der US 6,072,576 A zu entnehmen. Die erstgenannte Schrift realisiert einen Regler zur Nachführung von Stellgrößen, um im Rahmen eines Herstellungsprozesses ein Ist-Spektrum möglichst nah an ein Soll-Spektrum heranzuführen.

Die US 6,072,576 A schlägt hingegen vor, Materialeigenschaften von Inhaltsstoffen zu messen und passt dann das Spektrum aufgrund der Messungen an, um eine Materialeigenschaft über eine Änderung hinweg zu erhalten.

Bei der Produktüberwachung wird in der Industrie häufig ein großes Maß an Genauigkeit erfordert, wobei die Einflussgrößen der Herstellungsprozesse häufig nur schwer beeinflussbar sind. Gerade im Bereich der Lebensmittelherstellung oder der Pharmazie ist eine exakte Einhaltung von Zusammensetzungen der Produkte erforderlich, so dass eine ständige Überwachung der Herstellungsprozesse durchgeführt wird. Zu diesem Zweck werden dem Herstellungsprozess Modellspektren zugrunde gelegt, welche im Laufe der Herstellung im Rahmen ständiger Bestimmungen der Inhaltsstoffe mit den tatsächlichen Verhältnissen verglichen werden. Es ist daher erforderlich, die Kalibriermodelle des Herstellungsprozesses stets auf dem neuesten Stand zu halten, also bei einer Änderung einzelner Inhaltsstoffe eine entsprechende Änderung des Kalibriermodells vorzunehmen.

Ändert sich nun die Zusammensetzung eines Produkts, oder auch nur eine Zutat eines Produkts, so verändert sich dementsprechend auch das aus dem Produkt resultierende Spektrum, welches vorzugsweise als Nahinfrarot-Spektrum (NIR-Spektrum) ermittelt wird, so dass zur Wiedererlangung der geforderten Produkteigenschaften, mithin der Übereinstimmung mit dem Modellspektrum, eine Rekalibrierung zur Erstellung eines neuen Kalibriermodells erforderlich ist.

Allerdings ist die Herstellung eines Kalibriermodells mit großem Aufwand verbunden, mithin werden zur Erstellung eines Kalibriermodells üblicherweise zunächst Proben entnommen und diese im Labor analysiert, wonach in meist mehreren Versuchsreihen eine neue Kalibrierung erstellt wird mit dem Ziel, trotz der geänderten Inhaltsstoffe ein zumindest möglichst weitestgehend ähnliches Produkt zu erhalten. Hinzu kommt, dass oftmals die benötigten Proben vor Beginn des Herstellungsprozesses überhaupt nicht zur Verfügung stehen. Für einzelne Abweichungen müssen aufgrund prozessbedingter Wartezeiten im Rahmen der Analyse Zeitaufwendungen im Bereich von sechs Stunden in Kauf genommen werden, welche sich durch Abweichungen in verschiedenen Bereichen schnell zu mehreren Tagen kumulieren können.

Es ist jedoch auch bekannt, die dem Prozess entnommene Probe einem Rechnersystem zuzuführen, welches seinerseits ein Kalibriermodell berechnet. Diese Anwendung ist mit einem deutlich verringerten Zeitaufwand behaftet, stellt jedoch einen zusätzlichen Kostenfaktor dar.

Aufgrund der damit verbundenen Kosten und Zeitaufwendungen wird nach Wegen gesucht, die üblicherweise sehr aufwändige Erstellung neuer Kalibriermodelle zu automatisieren.

Vor diesem Hintergrund liegt der vorliegenden Erfindung die Aufgabe zu Grunde, ein Verfahren und eine Vorrichtung zur selbsttätigen Rekalibrierung eines Herstellungsprozesses zu schaffen, welche auf die Probenentnahme verzichten kann und die Berechnung neuer Kalibriermodelle vereinfacht und automatisiert.

Dies gelingt durch das Verfahren zur Rekalibrierung eines Herstellungsprozesses gemäß den Merkmalen des Hauptanspruchs, sowie durch die entsprechende Vorrichtung gemäß den Merkmalen des nebengeordneten Anspruchs 13. Sinnvolle Weiterbildungen von Verfahren und Vorrichtung können den jeweiligen Unteransprüchen entnommen werden.

Erfindungsgemäß wird zur Rekalibrierung eines Herstellungsprozesses ein neues Kalibriermodell dadurch gewonnen, dass bei einer Änderung der Inhaltsstoffe des Produkts aufgrund der bekannten Eigenschaften der Inhaltsstoffe selbsttätig eine neue Zusammensetzung, mithin eine neue Prozesskalibrierung so bestimmt wird, dass das zu erwartende Produkt mit der mithilfe von Modellspektren vorgegebenen Zielvorgabe möglichst weitestgehend, vorzugsweise vollständig, übereinstimmt. Das Produkt wird im Rahmen des Herstellungsprozesses mithilfe von Spektrometern überwacht, welche zu einzelnen Zeitpunkten Spektren, vorzugsweise NIR-Spektren, des Produkts erfassen. Im Falle einer Abweichung der Inhaltsstoffe von der durch die bisherige Kalibrierung erfassten Beschaffenheit ändert sich das Spektrum des Produkts. Aus dieser Änderung wird zunächst bestimmt, wie sich die Änderung des Inhaltsstoffs auf das Produkt auswirkt. Aus der Kenntnis des Systems über die Zusammensetzung des Produkts und die Eigenschaften der Inhaltsstoffe berechnet das System eine neue Kalibrierung, aufgrund derer die Zusammenstellung der Inhaltsstoffe so verändert wird, dass am Ende des Prozesses das gewünschte Produkt wieder hergestellt wird, das Spektrum des Produkts wieder mit dem Modellspektrum übereinstimmt. Dadurch, dass die erfindungsgemäße Rekalibrierung ggf. auch ohne die Entnahme von Proben und ohne Laborkalibrierungen und den Einsatz entkoppelter Rechensysteme ablaufen kann, wird dem Anwender zumindest in diesem Fall deren Kosten und Aufwand erspart und ferner sogar die zumindest weitgehend nahtlose Fortsetzung des Herstellungsbetriebes ermöglicht.

Jede Erfassung eines Spektrums löst im System eine Zeitstempelung aus, die es erlaubt, die Zusammensetzung des Produkts zu einem bestimmten Zeitpunkt nachzuvollziehen. Wird etwa durch Austausch eines Inhaltsstoffs die Zusammensetzung des Produkts bewusst verändert, so wird auch dieser Änderung ein Zeitstempel eingeprägt, so dass das System die Änderung der Inhaltsstoffe der korrespondierenden Änderung des Spektrums zuordnen kann. Auch im herkömmlichen Betrieb sind derartige Zeitstempel sinnvoll, um einzelne Chargen eines Produkts zeitlich einordnen und im Falle von Fehlern oder Reklamationen oder ähnlichem gezielt auf Produkte der gleichen Charge zugreifen zu können.

Eine Rekalibrierung kann mit Vorteil manuell dann ausgelöst werden, wenn eine Änderung eines oder mehrerer Inhaltsstoffe vorgenommen wurde. Produktionsbedingt kann es auch im normalen Betrieb zu Schwankungen in der Produktzusammensetzung kommen, wobei bei geringen Schwankungen möglicherweise noch keine Rekalibrierung durchgeführt werden muss. Soll dies, möglicherweise bei einer kleinen aber dauerhaften Änderung, doch der Fall sein, kann die Rekalibrierung vom Personal ausgelöst werden. Dem maßgeblichen Zeitpunkt der Änderung wird zudem ebenfalls ein Zeitstempel aufgeprägt, so dass das System erkennen kann, welche Änderung der Produktzusammensetzung auf die gewünschte Änderung zurückzuführen ist.

Nach der Berechnung des neuen Kalibriermodells ist es sinnvoll, das System, etwa eine Steuereinheit, welche auf den Herstellungsprozess einwirken kann, selbsttätig in den Ablauf eingreifen zu lassen, so dass die Vorgaben des neuen Kalibriermodells sofort exakt umgesetzt werden. Das neue Kalibriermodell kann dabei zudem validiert werden, indem das Ergebnis mit den Sollwerten verglichen und gegebenenfalls das Kalibriermodell selbsttätig nochmals nachgebessert wird. In dieser Form ist auch eine Entwicklung des selbsttätigen Kalibriermodells in mehreren Evolutionsschritten möglich.

Damit die Steuerung des Herstellungsprozesses weitgehend selbsttätig ablaufen kann, werden entsprechend der Erfindung die Eigenschaften der geänderten Inhaltsstoffe, einer an das System angeschlossenen Datenbank entnommen. In dieser Datenbank liegen neben den Modellspektren Datensätze über die Inhaltsstoffe des Produkts, die zur Berechnung neuer Kalibriermodelle sowie zur Bestimmung der Auswirkung einer Änderung einzelner Inhaltsstoffe erforderlich sind.

In sinnvoller Weiterbildung einer möglichst weitgehend selbsttätigen Erfassung der geänderten Substanz ist es mithin sinnvoll, die geänderte Substanz mithilfe von Spektrometern, insbesondere von NIR-Spektrometern selbsttätig zu erfassen und die auf diese Art und weise gewonnenen Daten ebenfalls selbsttätig in die Datenbank einzuspeisen.

Die Erfassung von Spektren des Produkts läuft mit besonderem Vorteil zumindest näherungsweise kontinuierlich ab, so dass eine ständige Überwachung des Produkts mithilfe von Spektrometern, vorzugsweise NIR-Spektrometern, gewährleistet ist. Im Falle signifikanter Abweichungen kann das System einen Alarm auslösen, welcher das Personal des Herstellungsprozess von der Abweichung in Kenntnis setzt, bzw. welches nach einer durch eine gewollte Änderung herbeigeführte Abweichung eine Rekalibrierung auslöst.

Erfindungsgemäß umfasst das System eine Recheneinheit, mit deren Hilfe im Falle einer beabsichtigten Änderung des Produktes ein neues Kalibriermodell berechnet wird. Hierzu werden die Eigenschaften der geänderten Substanz berücksichtigt, welche sich aus dem Vergleich zwischen dem Modellspektrum und dem abweichenden, ermittelten Spektrum ermitteln lassen. Die Recheneinheit greift dabei, nach Bedarf, auf die in der vorstehend beschriebenen Datenbank vorgehaltenen Daten zurück. Nach der Berechnung eines neuen Kalibriermodells wird dieses sukzessive und unter Beobachtung des Spektrums bis zur Vollständigkeit gegen das bisherige Kalibriermodell ausgetauscht. In einem ersten Schritt werden dazu zunächst Teile der so errechneten Kalibrierung Herstellungsprozess zu Grunde gelegt, nach erfolgreicher Validierung dieser neuen Kalibrierung wird die Ersetzung der ursprünglichen Kalibrierung bis zur vollständigen Ersetzung durchgeführt. Nach jedem Ersetzungsschritt wird das neue errechnete Kalibriermodell erneut validiert und im Falle einer fehlgeschlagenen Validierung neu berechnet.

Die vorstehend beschriebene Erfindung wird nachfolgend anhand eines in der Zeichnung schematisch dargestellten Beispiels näher erläutert.

Es zeigen
- Figur 1: den Prozess einer Rekalibrierung in einem Blockschaltbild, und
- Figur 2: den Prozess der Validierung eines neu berechneten Kalibriermodells.

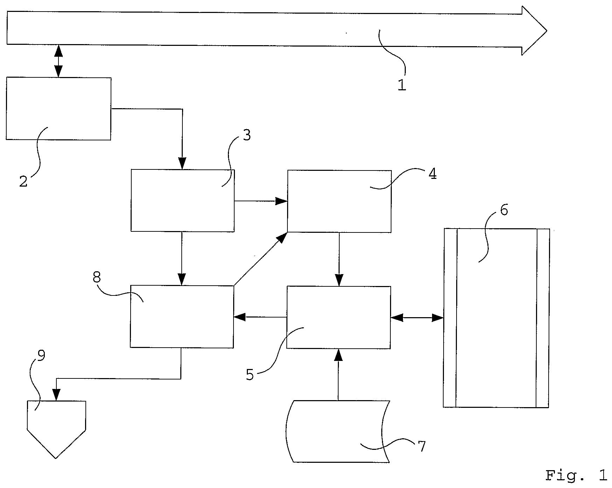

Figur 1 zeigt den Ablauf eines Rekalibrierungsvorgangs, bei dem von einem Produkt 1 mithilfe eines NIR-Spektrometers 2 zunächst eine Probemessung 3 durchgeführt wird. Die Eigenschaften des Produkts 1 werden ermittelt und es wird festgestellt, ob eine Abweichung von einem dem Produkt 1 als Referenz zugeordneten Modellspektrum vorliegt. Anhand des Modellspektrums wird geprüft, ob das Produkt 1 sich in den Vorgaben der Herstellungsvorschrift für das Produkt 1 bewegt. Soweit dies nicht zutrifft, muss geprüft werden, ob eine gewollte oder eine ungewollte Abweichung von dem Modellspektrum vorliegt. Im Falle einer Abweichung wird das System einen Alarm auslösen, worauf dann vom Benutzer zu ermitteln ist, ob die Abweichung akzeptabel ist oder nicht. Im Falle einer nicht akzeptablen Abweichung kann in den Produktionsablauf eingegriffen werden. Zur Prüfung, ob eine akzeptable Abweichung vorliegt, kann auf die in der Datenbank 7 vorgehaltenen Daten zurückgegriffen werden. Handelt es sich um eine gewollte Abweichung von dem Modellspektrum, wird in dem Moment der Veränderung, etwa in dem Moment des Austauschs eines Inhaltsstoffes gegen einen im Vergleich zum bisher benutzten Inhaltsstoff geänderten Inhaltsstoff, eine Mitteilung an das System ergehen. Der geänderte Inhaltsstoff oder die geänderte Konzentration des Inhaltsstoffs wird in das System, mithin in die Datenbank 7 händisch oder selbsttätig eingepflegt.

Soweit nun eine gewollte Änderung vorliegt, werden die Eigenschaften der Substanz 4, welche die Änderung charakterisieren, dem System übergeben oder von diesem anhand der Charakteristiken der Abweichung des Spektrums vom Modellspektrum ermittelt und werden in einem neu zu berechnenden Kalibriermodell 5 berücksichtigt. Hierzu werden die Eigenschaften der Substanz 4, die aktuelle Kalibrierung 8 sowie die erforderlichen Daten aus der Datenbank 7 an die Recheneinheit 6 übergeben, wo zunächst das neue Kalibriermodell 5 berechnet wird und wo im Folgenden eine Validierung durchgeführt wird.

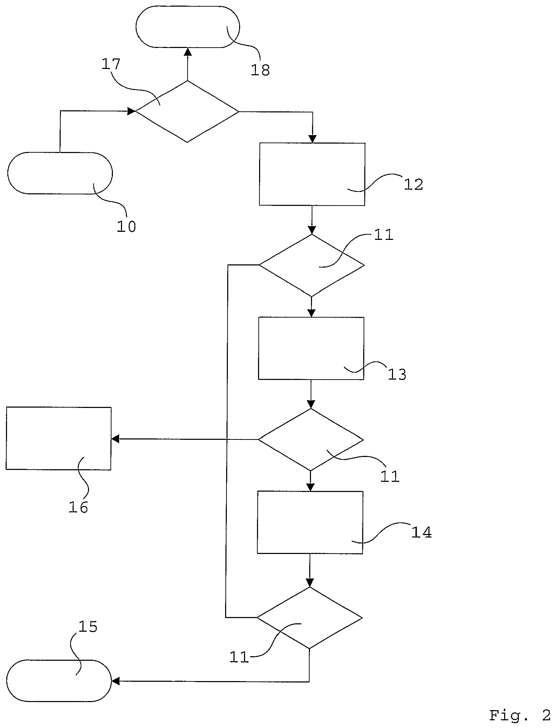

Der Ablauf der Validierung des neu berechneten Kalibriermodells 5 ist in Figur 2 dargestellt und wird weiter unten näher erläutert.

Soweit die neue Kalibrierung 5 sich im Rahmen der Validierung als nicht einsetzbar erweist, wird eine neue Berechnung durchgeführt, an die sich erneut eine Validierung anschließt. Sobald das neue Kalibriermodell 5 sich im Rahmen der Validierung als tauglich erweist, wird es gegen die aktuelle Kalibrierung 8 ausgetauscht und dem Prozess 9 zugeführt.

Figur 2 greift den Aspekt der Validierung aus dem oben beschriebenen Prozess heraus. Die Validierung eines neuen Kalibriermodells 5 wird durch die Übergabe des Kalibrierungprojekts 10 an die Recheneinheit 6 eingeleitet. Es folgt zunächst eine Prüfung 12, wobei, das neue Kalibriermodell zunächst als Testdatensatz eingesetzt wird. Ist die Validierung erfolgreich, wird anschließend eine Prüfung mit Teilen der Kalibrierung 13 im Probebetrieb durchgeführt und die ursprüngliche Kalibrierung, wiederum im Erfolgsfalle, im Rahmen einer weiteren Prüfung mit der vollständigen neuen Kalibrierung 14 komplett ersetzt. Wird auch die vollständige neue Kalibrierung erfolgreich validiert, so erfolgt die Übernahme der neuen Kalibrierung 15 und die Fortsetzung des Herstellungsprozesses. Soweit eine der vorgenannten Validierungen nicht erfolgreich ist, folgt hierauf der Neustart der Berechnung der Kalibrierung 16, woran sich wiederum der vollständige Validierungsprozess erneut anschließt.

Vorstehend beschrieben ist somit ein Verfahren und eine Vorrichtung zur Kalibrierung eines Herstellungsprozesses, bei dem eine aufwändige Rekalibrierung im Wege der Probenentnahme und Laboranalyse bei einer Veränderung der Inhaltsstoffe eines Produkts entfallen kann. Dies wird dadurch erreicht, dass aufgrund der Eigenschaften der geänderten Substanz, welche aus der Abweichung des Spektrums und dem Modellspektrum unter Zuhilfenahme weiterer Prozessdaten und unter Berücksichtigung des bisherigen Kalibriermodells ein neues Kalibriermodell errechnet wird, welches nach sorgfältiger Validierung gegen das bislang eingesetzte Kalibriermodell ausgetauscht wird.

### BEZUGSZEICHENLISTE

- 1: Produkt
- 2: NIR-Spektrometer
- 3: Probemessung
- 4: Eigenschaften der Substanz
- 5: Neues Kalibriermodell
- 6: Recheneinheit
- 7: Datenbank
- 8: Aktuelle Kalibrierung
- 9: Prozess
- 10: Übergabe des Kalibrierungsprojekts
- 11: Validierung erfolgreich
- 12: Prüfung als Testdatensatz
- 13: Prüfung mit Teilen der neuen Kalibrierung
- 14: Prüfung mit der vollständigen neuen Kalibrierung
- 15: Übernahme der neuen Kalibrierung
- 16: Neustart der Berechnung der Kalibrierung
- 17: Prüfung auf Abweichung
- 18: Keine Aktion

## Patentansprüche

1. Verfahren zur Rekalibrierung eines Herstellungsprozesses, wobei das Spektrum eines aus Inhaltsstoffen hergestellten Produkts (1) mithilfe wenigstens eines Spektrometers überdacht wird und im Falle einer Abweichung des Spektrums des Produkts (1) von einem Modellspektrum eine selbsttätige Rekalibrierung dadurch vorgenommen wird, dass aufgrund der Differenz zwischen tatsächlichem Spektrum des Produkts und Modellspektrum und aus der Kenntnis über die Zusammensetzung des Produkts und die Eigenschaften der Inhaltsstoffe mithilfe einer Recheneinheit (6) ein neues Kalibriermodell (5) derart bestimmt wird, dass die Zusammenstellung der Inhaltsstoffe so verändert wird, dass eine Angleichung des Spektrums des Produkts an das Modellspektrum bewirkt wird, wobei das Produkt (1) aus mehreren Inhaltsstoffen hergestellt wird und im Rahmen einer Rekalibrierung die Eigenschaften eines geänderten Inhaltsstoffs (4) oder mehrerer geänderter Inhaltsstoffe einer Datenbank (7) entnommen werden, auf welche von der Recheneinheit (6) zugegriffen werden kann.

2. Verfahren gemäß Anspruch 1, **dadurch gekennzeichnet, dass**, vorzugsweise allen, über die Zeit bestimmten Spektren ein Zeitstempel zugewiesen wird.

3. Verfahren gemäß Anspruch 2, **dadurch gekennzeichnet, dass** bedarfsweise die Rekalibrierung auch manuell ausgelöst wird, wobei die Auslösung der Rekalibrierung einem Zeitstempel zugeordnet wird.

4. Verfahren gemäß einem der vorhergehenden Ansprüche, **dadurch gekennzeichnet, dass** aufgrund des neuen Kalibriermodells (5) selbsttätig in den Herstellungsprozess eingegriffen wird.

5. Verfahren gemäß einem der vorhergehenden Ansprüche, **dadurch gekennzeichnet, dass** die Eigenschaften des oder der geänderten Inhaltsstoffs bzw. Inhaltsstoffe selbsttätig insbesondere mithilfe von Spektrometern (2) erfasst werden und in die Datenbank (7) eingespeist werden.

6. Verfahren gemäß einem der vorhergehenden Ansprüche, **dadurch gekennzeichnet, dass** die dem Produkt (1) zugeführten Inhaltsstoffe mithilfe wenigstens eines Spektrometers (2) kontinuierlich beobachtet werden und vorzugsweise im Falle einer Abweichung der detektierten Inhaltsstoffe einen, zumindest systeminternen, Alarm auslösen.

7. Verfahren gemäß einem der vorhergehenden Ansprüche, **dadurch gekennzeichnet, dass** anhand der Eigenschaften des geänderten Inhaltsstoffs (4) von der Recheneinheit (6) ein neues Kalibriermodell (5) berechnet wird, wobei anhand der Eigenschaften des geänderten Inhaltsstoffs (4) die Auswirkungen der Änderung auf das aktuelle Spektrum berücksichtigt werden.

8. Verfahren gemäß einem der vorhergehenden Ansprüche, **dadurch gekennzeichnet, dass** nach Berechnung eines neuen Kalibriermodells (5) dieses sukzessive und unter Beobachtung des Spektrums bis zur Vollständigkeit gegen die bisherige Kalibrierung ausgetauscht wird.

9. verfahren gemäß Anspruch 8, **dadurch gekennzeichnet, dass** im Fall, dass eine weitere Veränderung des Kalibriermodells nicht mehr erfolgen muss, das Kalibriermodell beibehalten wird.

10. Verfahren gemäß Anspruch 8, **dadurch gekennzeichnet, dass** nach jedem Austauschschritt (11,12,13) das neue Kalibriermodell (5) validiert wird und der Austausch lediglich im Fall einer erfolgreichen Validierung fortgesetzt wird.

11. verfahren gemäß Anspruch 10, **dadurch gekennzeichnet, dass** der Austausch im Falle einer erfolglosen Validierung abgebrochen und die erneute Berechnung eines neuen Kalibrierungsmodells angestoßen wird.

12. Verfahren gemäß einem der vorhergehenden Ansprüche, **dadurch gekennzeichnet, dass** zur Erfassung der Spektren die Nahinfrarot-Spektroskopie (NIR-Spektroskopie) eingesetzt wird.

13. Vorrichtung zur Rekalibrierung eines Herstellungsprozesses umfassend wenigstens ein Spektrometer (2) zur Erfassung eines Spektrums, vorzugsweise eines NIR-Spektrums, eines aus Inhaltsstoffen hergestellten Produkts (1), wenigstens eine Recheneinheit (6) zur Berechnung von Kalibriermodellen, zumindest eine Datenbank (7) mit darin gespeicherten Daten über Produkte (1) und Inhaltsstoffe und wenigstens eine Steuereinheit zur Prozesssteuerung, wobei die Vorrichtung dafür ausgelegt ist, im Falle einer Abweichung des Spektrums des Produkts (1) von einem Modellspektrum eine Rekalibrierung selbsttätig dadurch vorzunehmen, dass eine Bestimmung eines neuen Kalibriermodells (5) durch die Recheneinheit (6) so durchgeführt wird, dass aufgrund der Differenz zwischen tatsächlichem Spektrum des Produkts und Modellspektrum und aus der Kenntnis über die Zusammensetzung des Produkts und die Eigenschaften der Inhaltsstoffe das neue Kalibriermodell derart bestimmt wird, dass die Zusammenstellung der Inhaltsstoffe so verändert wird, dass eine Angleichung des Spektrums des Produkts an das Modellspektrum bewirkt wird, und das so berechnete, neue Kalibriermodell (5) zum Austausch des bisherigen Kalibriermodells an die Steuereinheit zu übertragen, wobei das Produkt (1) aus mehreren Inhaltsstoffen hergestellt wird und im Rahmen einer Rekalibrierung die Eigenschaften eines geänderten Inhaltsstoffs (4) oder mehrerer geänderter Inhaltsstoffe der Datenbank (7) entnehmbar sind, mit welcher die Recheneinheit (6) datenverbunden ist.

## Claims

1. A method for recalibrating a production process,
wherein the spectrum of a product (1), which is produced from ingredients, is monitored with the aid of at least one spectrometer, and in the case of a deviation of the spectrum of the product (1) from a model spectrum, an automatic recalibration is performed in that, on the basis of the difference between actual spectrum of the product and model spectrum and from the knowledge about the composition of the product and the properties of the ingredients, a new calibration model (5) is determined with the aid of a computer unit (6) such that the composition of the ingredients is changed so that an adaptation of the spectrum of the product to the model spectrum is caused,
wherein the product (1) is produced from multiple ingredients and, in the scope of a recalibration, the properties of one changed ingredient (4) or multiple changed ingredients are taken from a database (7), which can be accessed by the computer unit (6).

2. The method according to Claim 1, **characterized in that** a timestamp is assigned to preferably all spectra determined over time.

3. The method according to Claim 2, **characterized in that** the recalibration is also manually triggered if needed, wherein a timestamp is assigned to the triggering of the recalibration.

4. The method according to any one of the preceding claims, **characterized in that** the production process is intervened in automatically on the basis of the new calibration model (5).

5. The method according to any one of the preceding claims, **characterized in that** the properties of the changed ingredient or ingredients are detected automatically, in particular with the aid of spectrometers (2), and fed into the database (7).

6. The method according to any one of the preceding claims, **characterized in that** the ingredients supplied to the product (1) are continuously observed with the aid of at least one spectrometer (2) and an alarm, at least a system-internal alarm, is preferably triggered in the case of a deviation of the detected ingredients.

7. The method according to any one of the preceding claims, **characterized in that**, on the basis of the properties of the changed ingredient (4), a new calibration model (5) is calculated by the computer unit (6), wherein the effects of the change on the present spectrum are taken into consideration on the basis of the properties of the changed ingredient (4).

8. The method according to any one of the preceding claims, **characterized in that**, after calculation of a new calibration model (5), it is replaced successively and with observation of the spectrum until completeness for the previous calibration.

9. The method according to Claim 8, **characterized in that** in the case in which a further change of the calibration model no longer has to take place, the calibration model is maintained.

10. The method according to Claim 8, **characterized in that**, after each replacement step (11, 12, 13), the new calibration model (5) is validated and the replacement is only continued in case of a successful validation.

11. The method according to Claim 10, **characterized in that** the replacement is terminated in the case of a failed validation and the renewed calculation of a new calibration model is initiated.

12. The method according to any one of the preceding claims, **characterized in that** near infrared spectroscopy (NIR spectroscopy) is used for detecting the spectra.

13. A device for recalibrating a production process comprising at least one spectrometer (2) for detecting a spectrum, preferably a NIR spectrum, of a product (1) produced from ingredients,
at least one computer unit (6) for calculating calibration models, at least one database (7) having data stored therein about products (1) and ingredients, and at least one control unit for process control,
wherein the device is designed for the purpose, in case of the deviation of the spectrum of the product (1) from a model spectrum, performing a recalibration automatically in that a determination of a new calibration model (5) is carried out by the computer unit (6) so that on the basis of the difference between actual spectrum of the product and model spectrum and from the knowledge about the composition of the product and the properties of the ingredients, the new calibration model is determined such that the composition of the ingredients is changed so that an adaptation of the spectrum of the product to the model spectrum is caused, and the new calibration model (5) thus calculated is to be transmitted to the control unit for replacement of the previous calibration model,
wherein the product (1) is produced from multiple ingredients and, in the scope of a recalibration, the properties of one changed ingredient (4) or multiple changed ingredients can be taken from the database (7), to which the computer unit (6) has a data connection.

## Revendications

1. Procédé pour le réétalonnage d'un processus de fabrication, dans lequel le spectre d'un produit (1) fabriqué à partir d'ingrédients est surveillé à l'aide d'au moins un spectromètre et, en cas d'écart du spectre du produit (1) par rapport à un modèle de spectre, un réétalonnage automatique est réalisé par le fait que, sur la base de la différence entre le spectre réel du produit et le modèle de spectre et à partir de la connaissance de la composition du produit et des propriétés des ingrédients, une unité de calcul (6) détermine un nouveau modèle d'étalonnage (5) de telle manière que la composition des ingrédients soit modifiée de façon à rapprocher le spectre du produit du modèle de spectre,
dans lequel le produit (1) est fabriqué à partir de plusieurs ingrédients et dans le cadre d'un réétalonnage, les propriétés d'un ingrédient changé (4) ou de plusieurs ingrédients changés sont tirées d'une base de données (7) à laquelle l'unité de calcul (6) peut accéder.

2. Procédé selon la revendication 1, **caractérisé en ce qu'**un horodatage est attribué aux spectres, de préférence à tous les spectres, déterminés dans le temps.

3. Procédé selon la revendication 2, **caractérisé en ce que** si nécessaire, le réétalonnage peut aussi être déclenché manuellement, auquel cas un horodatage est attribué au déclenchement du réétalonnage.

4. Procédé selon l'une des revendications précédentes, **caractérisé en ce qu'**une intervention dans le processus de fabrication est réalisée automatiquement sur la base du nouveau modèle d'étalonnage (5).

5. Procédé selon l'une des revendications précédentes, **caractérisé en ce que** les propriétés de l'ingrédient ou des ingrédients changés sont automatiquement acquises, en particulier à l'aide de spectromètres (2), et entrées dans la base de données (7).

6. Procédé selon l'une des revendications précédentes, **caractérisé en ce que** les ingrédients introduits dans le produit (1) sont surveillés de façon continue à l'aide d'au moins un spectromètre (2) et déclenchent de préférence une alarme, au moins interne au système, en cas d'écart des ingrédients détectés.

7. Procédé selon l'une des revendications précédentes, **caractérisé en ce qu'**un nouveau modèle d'étalonnage (5) est calculé à l'aide des propriétés de l'ingrédient changé (4) par l'unité de calcul (6), les conséquences du changement sur le spectre actuel étant prises en compte à l'aide des propriétés de l'ingrédient changé (4).

8. Procédé selon l'une des revendications précédentes, **caractérisé en ce qu'**après le calcul d'un nouveau modèle d'étalonnage (5), celui-ci est progressivement substitué à l'ancien étalonnage, en surveillant le spectre jusqu'à ce qu'il soit complet.

9. Procédé selon la revendication 8, **caractérisé en ce que** dans le cas où plus aucun changement du modèle d'étalonnage n'est nécessaire, le modèle d'étalonnage est conservé.

10. Procédé selon la revendication 8, **caractérisé en ce qu'**après chaque étape d'échange (11, 12, 13), le nouveau modèle d'étalonnage (5) est validé et l'échange n'est poursuivi que si la validation est réussie.

11. Procédé selon la revendication 10, caractérisé en que si la validation ne réussit pas, l'échange est interrompu et un nouveau calcul d'un nouveau modèle d'étalonnage est lancé.

12. Procédé selon l'une des revendications précédentes, **caractérisé en ce que** la spectroscopie dans le proche infrarouge (spectroscopie NIR) est utilisée pour acquérir les spectres.

13. Dispositif pour le réétalonnage d'un processus de fabrication comprenant au moins un spectromètre (2) pour acquérir un spectre, de préférence un spectre NIR, d'un produit (1) fabriqué à partir d'ingrédients, au moins une unité de calcul (6) pour le calcul de modèles d'étalonnage, au moins une base de données (7) dans laquelle sont enregistrées des données sur des produits (1) et des ingrédients et au moins une unité de commande pour la commande du processus, le dispositif étant conçu pour réaliser un réétalonnage de façon automatique si le spectre du produit (1) s'écarte d'un modèle de spectre, **caractérisé en ce qu'**une détermination d'un nouveau modèle d'étalonnage (5) est réalisée par l'unité de calcul (6) de telle façon que le nouveau modèle d'étalonnage soit déterminé sur la base de la différence entre le spectre effectif du produit et le modèle de spectre et à partir de la connaissance de la composition du produit et des propriétés des ingrédients, de telle sorte que la composition de l'ingrédient soit changée afin de rapprocher le spectre du produit du modèle de spectre, et le nouveau modèle d'étalonnage (5) ainsi calculé est transmis à l'unité de commande pour remplacer l'ancien modèle d'étalonnage (5), le produit (1) étant fabriqué à partir de plusieurs ingrédients et les propriétés d'un ingrédient changé (4) ou de plusieurs ingrédients changés pouvant être extraites, lors d'un réétalonnage, d'une base de données (7) avec laquelle l'unité de calcul (6) est connectée.
